# EUROPEAN PATENT APPLICATION

(11) **EP 1 195 989 A2**
(43) Date of publication of application: **10.04.2002**
(21) Application number: 01106167.8
(22) Date of filing: 13.03.2001
(51) Int. Cl.: H04N 5/445

(54) **Video processing device**

(30) Priority: 29.09.2000 JP 2000300445
(71) Applicant: KABUSHIKI KAISHA TOSHIBA, Kawasaki-shi, Kanagawa-ken 210-8572 (JP)
(72) Inventor: Ohkita, Hideki, c/oKabushiki Kaisha Toshiba, IPD, Tokyo 105-8001 (JP)
(74) Representative: Henkel, Feiler, Hänzel

(57) **Abstract**

An OSD status checking section (A5) of controller equipment (A) transmits a check instruction to an OSD controlling section (B4) of target equipment (B) via an 1394 bus to cause the OSD controlling section (B4) to check an OSD synthesizing section (B2) for a display status and to notify the OSD status checking section (A5) of a result of the display check. Based on the result of the check of the OSD status, an operation selecting section (A6) of the controller equipment (A) determines whether to transmit an input from an input section (A6) to the OSD controlling section (B4) of the target equipment (B) or to an OSD controlling section (A4) of the controller equipment (A). Thus, the controller equipment (A) can check the target equipment (B) for the OSD status and determine, depending on the status, the OSD on the controller equipment (A) and a target of operation from a remote controller (C), thereby providing appropriate display contents and enabling appropriate operations.

## Description

The present invention relates to a video transmitting device and a video display device for displaying video signals transferred from the video transmitting device through a fast serial bus, and in particular, to a display controlling technique used if both the video transmitting device and the video display device have an OSD (On Screen Display) function.

An IEEE 1394 standard-conforming fast serial bus (hereafter referred to as an "1394 bus") that can transfer a large amount of digital video signals is becoming popular. This 1394 bus can be used, for example, to connect a DTV (Digital Television Receiver) and a DVD (Digital Versatile Disc reproducing device) together. In this case, information can be transmitted between the DTV and DVD in both directions; when the DTV requests an arbitrary video from the DVD, the request signal is transmitted to the DVD via the 1394 bus and a digital video signal reproduced by the DVD as requested is transferred to the DTV via the 1394 bus at a high speed, so that the video is displayed on the DTV.

If, however, controller equipment (a video display device such as the DTV) controls target equipment (a video transmitting device such as the DVD) via the 1394 bus, when the target equipment has an OSD function of overlaying a sub-video (hereafter referred to as an "OSD") on the video signal before transmission, the following problems may occur.

First, since the controller equipment has no means for detecting duplication between the OSD from the controller equipment and the OSD from the target equipment, if the OSD from the controller equipment overlaps the OSD from the target equipment, either OSD may be concealed or other display problems may occur. Further, if each equipment uses the OSD function to display a screen representing a control panel and controls itself or the target equipment by using a cursor key or the like to operate the control panel on the screen, it is unclear to which equipment a key such as the cursor key which is used by both equipment is to be transmitted. Moreover, both equipment may use the OSD function to display a warning message with the same content due to an error or the like but this overlapping display cannot be avoided.

As described above, in the prior art, if the video display device controls video transmitting device via a fast serial bus and when both the video display and transmitting devices have the OSD function, the two OSDs may overlap each other, thereby hindering appropriate display or control.

In view of these problems, it is an object of the present invention to provide video processing devices as controller equipment and target equipment which can appropriately control the status of an OSD synthesized by the controller or target equipment.

A video processing device as controller equipment according to the present invention comprises video requesting and receiving means for receiving a video from a video transmitting device via a communication line, the video transmitting device selectively synthesizing a sub-video on a transmitted video, sub-video synthesizing means for selectively synthesizing a sub-video on the received video obtained by the video requesting and receiving means, display means for displaying the received video with the sub-video synthesized thereon by the sub-video synthesizing means, sub-video synthesis status checking means for checking the received video for a sub-video synthesis status by transmitting a check request for checking of a sub-video synthesis status to the video transmitting device via the communication line and receiving a response to the check signal from a video source via the communication line, and sub-video controlling means for controlling a sub-video display status of the sub-video synthesizing means depending on the sub-video synthesis status checked by the sub-video synthesis status checking means.

Further, a video processing device as target equipment comprises sub-video synthesizing means for selectively synthesizing a sub-video on a video, video transmitting means for transmitting the video with the sub-video synthesized thereon by the sub-video synthesizing means, to a video display device via a communication line, and sub-video synthesis status notifying means for notifying the video display device of a sub-video synthesis status of the sub-video synthesizing means via the communication line in response to a sub-video synthesis status check request transmitted from the video display device.

If the video processing devices as the controller equipment and the target equipment configured as described above are connected together via, for example, a fast serial bus, the controller equipment can check the sub-video synthesis status of the target equipment and determine, depending on the status, a sub-video display on the controller equipment and a target of a user input operation, thereby providing appropriate display contents and enabling appropriate operations.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the configuration of one embodiment of a video transfer and display processing device according to the present invention;
FIG. 2 is a view showing a specific example of connections in the video transfer and display processing device configured as shown in FIG. 1, as well as an example of an OSD;
FIG. 3 is a view useful in explaining the present invention, showing an example of display on a conventional device;
FIGS. 4A, 4B, and 4C are views showing an example of OSD control according to this embodiment;
FIG. 5 is a view useful in explaining the operation of a control panel using a remote controller of a DTV display device according to this embodiment;
FIG. 6 is a view showing an example of a data format used to check an OSD status according to this embodiment;
FIG. 7 is a view showing another example of a data format used to check the OSD status according to this embodiment;
FIG. 8 is a view showing a first example of display of a DTV control panel displaying a DVD title menu, according to this embodiment;
FIG. 9 is a view showing a second example of display of the DTV control panel displaying the DVD title menu, according to this embodiment;
FIG. 10 is a view showing a third example of display of the DTV control panel displaying the DVD title menu, according to this embodiment;
FIG. 11 is a view useful in explaining the present invention, showing an example of display on a conventional device;
FIG. 12 is a view showing an operational flow wherein controller equipment controls an OSD from target equipment according to this embodiment;
FIG. 13 is a view showing an operational flow wherein the controller equipment checks the target equipment for a change in OSD status so that the OSD from the controller equipment is controlled based on a result of the check;
FIG. 14 is a view showing an operational flow for control provided if the controller equipment receives a result of a button operation from an input device such as a remote controller;
FIGS. 15A to 15D are views showing an operational flow for control provided if the controller equipment receives a result of a button operation from an input device such as a remote controller; and
FIG. 16 is a view showing an operational flow for avoiding the overlapping display of the same error message on both the controller and target equipment.

Embodiments of the present invention will be described below with reference to the drawings.

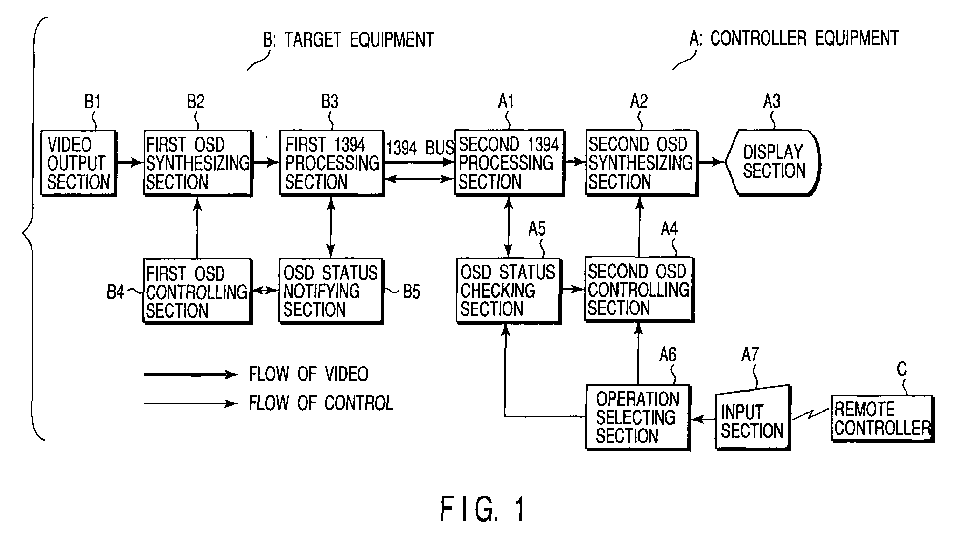

FIG. 1 is a block diagram showing the configuration of one embodiment of a video transfer and display processing device. Reference A denotes controller equipment such as a DTV which can display videos, and reference B denotes target equipment such as a DVD which is controlled by the controller equipment A to the transmit videos.

In the target equipment B, a video output section B1 outputs a video stream from a medium (such as a DVD medium), a broadcasting wave, or other video devices, and the video stream is transmitted to a first OSD synthesizing section B2. The first OSD synthesizing section B2 synthesizes (overlays) a graphic (OSD) such as a first control panel on the input video stream as required. This graphic is also referred to as a "sub-video", which differs from the sub-picture defined in the DVD standard but refers to a controlling graphic (OSD) such as a control panel. However, the sub-picture defined in the DVD standard may be processed as the sub-video.

The first OSD synthesizing section B2 is controlled by a first OSC controlling section B4, described later. A video with a graphic synthesized thereon by the first OSD synthesizing section B2 is converted by a first 1394 processing section B3 into an isochronous packet, which is defined in the IEEE 1394; the isochronous packet is then transmitted to controller equipment A via an 1394 bus.

In the controller equipment A, the isochronous packet transmitted via the 1394 bus is transmitted to a second 1394 processing section A1. The second 1394 processing section A1 reconverts the received isochronous packet into a video stream, a second OSD synthesizing section A2 subsequently synthesizes a graphic (OSD) such as a second control panel on this video stream as required, and a display section A3 then displays the synthesized video stream. The second OSD synthesizing section A2 is controlled by a second OSD controlling section A4, described later.

The first OSD synthesizing section B2 and the second OSSD synthesizing section A2 encode or decode the video stream as required. Specifically, if the video output section B1 outputs a MPEG2-TS as the video stream, the first OSD synthesizing section B2 decodes the received MPEG2-TS into a base band, subjects the base band to an OSD process, reencode the processed base band into a MPEG2-TS, and passes the reencoded MPEG2-TS to the first 1394 processing section B3. The second OSD synthesizing section A2 similarly decodes the received MPEG2-TS into a base band, subjects the base band to an OSD process, and transfers the processed base band to the display section A3.

An OSD status checking section A5 of the controller equipment A transmits a check instruction to the first OSD controlling section B4 of the target equipment B to check the first OSD controlling section B2 for a display status. Specific examples of the display status include whether or not a vide is being displayed, a display range, an error code, etc. The first OSD controlling section B4 checks the first OSD synthesizing section B2 for the display status, and if the status has changed, causes an OSD status notifying section B5 to notify an OSD status checking section A5 of the controller equipment A of the change via the 1394 bus.

Based on a result of the check by the OSD status checking section A5, an operation selecting section A6 of the controller equipment A selects which of the first OSD controlling section B4 of the target equipment and the second OSD controlling section A4 of the controller equipment A it is to transmit an input from an input section A6 (for example, a key operation input from a remote controller C). If the input operation from the input section A7 is to be transmitted to the first OSD controlling section B4 of the target equipment B, the second 1394 controlling section B3 converts it into a format for the 1394 bus and then transmits the resulting data to the first 1394 controlling section A1.

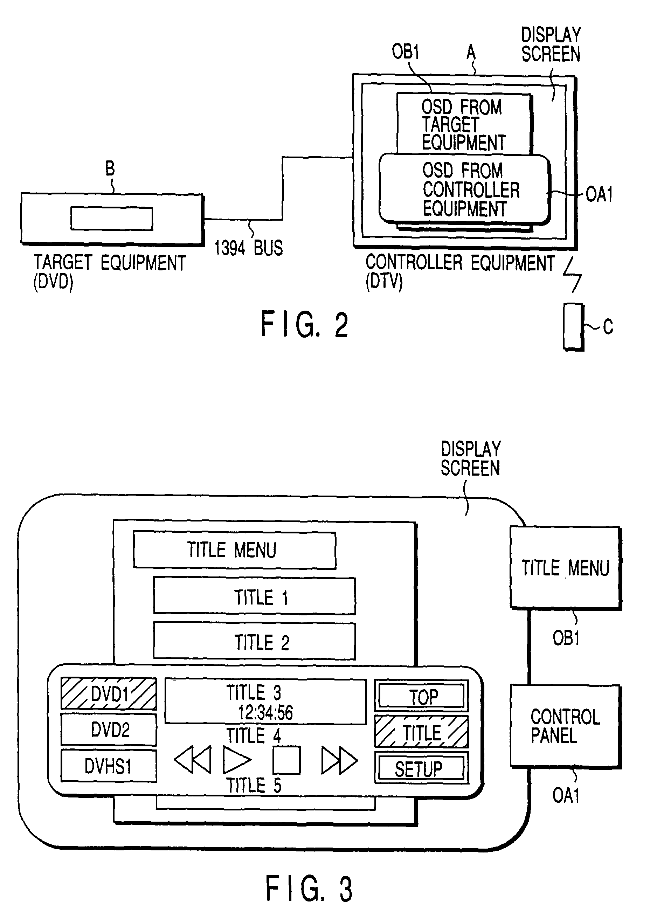

FIG. 2 is a view showing specific example of connections in the video transfer and display processing device configured as described above, as well as an example of an OSD. In this case, a specific example of the target equipment B is a DVD player, and a specific example of the controller equipment A is a DTV display device.

The DVD player B overlays an OSD such as a control panel OB1 on a video in a medium inserted thereinto, and transfers the resulting video to the DTV display device via the IEEE 1394 bus as a video stream. The transferred video stream is displayed on a display screen of the DTV display device A. The DTV display device A overlays an OSD such as a control panel OA1 on the transferred video stream as required. The control panels OA1 and OB1 overlaid on the video stream are operated using a cursor key of the remote controller C.

With the conventional device configuration, the control panel OB1 of the DVD player B is transferred while being overlaid on the video stream, so the DTV display device A cannot check whether the OSD from the DVD player is being displayed. Thus, the DTV display device A may superpose the control panel OA1 on the control panel OB1 of the DVD player B or it may be impossible to determine whether the DTV display device A or the DVD player B is to process the operation of the cursor key or the like from the remote controller C.

With the device configuration according to this embodiment, the DTV display device A can check the DVD player B for the OSD status and depending on a result of the check, determine an OSD from the DTV display device A or a target of the operation from the remote controller C, thereby obtaining appropriate display contents and enabling appropriate operations.

FIG. 3 is a view useful in explaining the present invention, showing an example of display on a conventional device. This figure shows an example where the target equipment B comprises a DVD player and the controller equipment A comprises a DTV display device.

In FIG. 3, the title menu OB1 is a control panel (menu) displayed by the DVD player B using the OSD function in order to allow a user to select a title; the title menu OB1 shows a list of titles recorded in the DVD medium. The control panel OA1 is displayed by the DTV display device A using the OSD function and used by the DTV display device A to control the DVD player B. Specific examples of control by the DVD player B include medium operations such as reproduction, stop, and fast forward and the invocation of menus such as a top menu, the title menu, and a setup menu. The title menu OB1 and the control panel OA1 are both controlled using the remote controller C (arrow and enter keys) of the DTV display device A.

FIG. 3 shows an example where the title menu OB1 of the DVD player B is displayed by operating the cursor key to depress a title button in the control panel OA1. In addition to the title menu OB1, methods for displaying the menu of the DVD player B include the automatic display of a menu such as multiangle control panel during reproduction dependent on the contents of the DVD medium, and the automatic deletion of a menu by means of menu operations. The menu can be displayed or hidden using various timings.

Since the prior art has no means for checking whether the title menu OB1 is being displayed on the DTV display device A, the control panel OA1 cannot be appropriately displayed and these two menus may overlap each other. Thus, to operate the menu in the background, it has been necessary to manually hide the menu in the foreground. Further, if the menus of the two equipment are both hidden, since the DTV display device A has no means for assuring that the DVD player B is not displaying the menu, it may uselessly transfer an "AV/C" command corresponding to the cursor key to the DVD player B. Furthermore, if the DTV display device A is to be controlled (operation of channels or volume using the arrow keys), the control cannot be switched.

With the device configuration according to this embodiment, the controller equipment (DTV display device) A can provide appropriate control while checking the target equipment (DVD player) for the OSD display status.

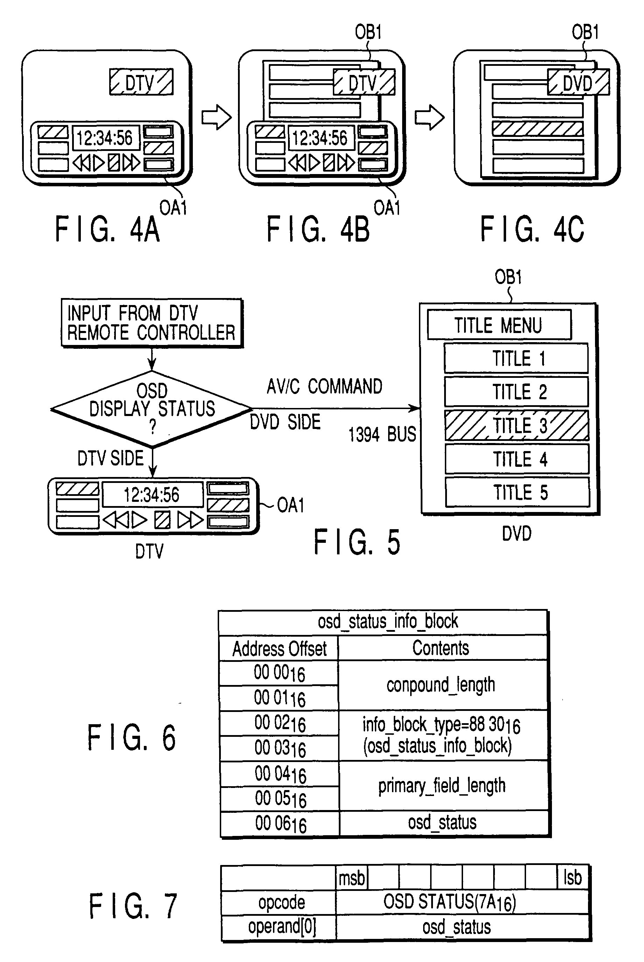

FIGS. 4A, 4B, and 4C are views showing an example of OSD control according to this embodiment;

The display screen shown in FIG. 4A shows how the OSD is provided on the DTV display device A. Certain conditions for this display screen cause the OSD to be provided on the DVD player, resulting in the display screen shown in FIG. 4B. According to this embodiment, the DTV display device A can check the DVD player for the OSD status, so that when the OSD changes as stated above, an appropriate operation such as hiding of the OSD from the DTV display device can be performed.

Even if, for example, the control panel OA1 of the DTV display device is operated to transmit a "Root Menu" display command to the DVD player B to cause it to display its OSD, the DTV display device A can reliably assure that the OSD is being displayed, thereby enabling more reliable control. Further, even if the control panel is displayed in a multiangle section while the DVD player B is reproducing the DVD medium, the DTV display device A can determine a change in OSD status. Moreover, as shown in FIGS. 4A to 4C, messages or icons such as "DTV" for a DTV operation and "DVD" for a DVD operation which indicate a target of operation can be displayed on the screen, thus enabling the user to operate the equipment without being confused.

FIG. 5 is a view useful in explaining the operation of the control panel using the remote controller C of the DTV display device A according to this embodiment.

In FIG. 5, inputs from the remote controller C (a cursor operations or the like) have their operation targets selected depending on the OSD status of the DTV display device A and of the DVD player B. Specifically, while the OSD from the DTV display device A is being presented, the remote controller inputs are used to control the control panel OA1 of the DTV display device A. While the OSD from the DVD player is being presented, the remote controller inputs are converted into an "AV/C" command format and these commands are transferred to the DVD player B via the 1394 bus and used to control the control panel OB1 of the DVD player B.

In this manner, it is possible to reliably determine which OSD the DTV display device A is controlling, without a DTV/DVD switching button on the remote controller C of the DTV display device A. Thus, if, for example, any arrow key is depressed, the remote controller operation command can e automatically directed to the DTV display device A or the DVD player B. Further, the user is not required to operate a switching button and can achieve the object with fewer button operations.

However, the remote controller C of the DTV display device A may of course include a DTV/DVD switching button. In this case, even if, for example, infrared codes from the remote controller C are directly transmitted to each of the DTV display device A and the DVD player B, since the configuration of this embodiment enable the operation target to be specified by displaying icons or messages, the user can perform appropriate switching operations.

FIG. 6 is a view showing an example of a data format used to check the OSD status according to this embodiment.

This embodiment shows an example of a data format that uses "Info Block" described in "Enhancement to the AV/C General Specification 3.0" issued by 1394TA. This data format is stored in the target equipment B and read out by the controller equipment A using the command "READ INFO BLOCK" or the like. The OSD display status is stored in the "osd_status" section in a form such as 70h (displayed) or 60h (hidden), for example. Specifically, an "osd_status_info_block" is stored in a "source_plug_status_area_info_block" described in "AV/C Disc Subunit General Specification 1.0" issued by 1394TA.

The "osd_status_info_block" may contain the contents of the display (an error message code or the like) or the position of the cursor on the control panel in addition to the indication of whether the OSD is being displayed or hidden; the data format is not limited to this embodiment.

FIG. 7 is a view showing another example of a data format used to check the OSD status according to this embodiment. This embodiment shows an example of a data format that uses an "AV/C Status" command described in "AV/C General Specification 3.0" issued by 1394TA. The controller equipment A transmits this data format to the target equipment B in the form of the "AV/C Status" command, and the target equipment B stores the OSD status in the "osd_status" section in the form such as 70h (displayed) or 60h (hidden), for example. Further, if this format is applied to an "AV/C Notify" command described in "AAV/C General Specification 3.0", when the OSD status of the target equipment B changes, the target equipment B can notify the controller equipment A of the content of this change.

The "AV/C Status" or "AV/C Notify" command may contain the contents of the display (an error message code or the like) or the position of the cursor on the control panel in addition to the indication of whether the OSD is being displayed or hidden; the data format is not limited to this embodiment.

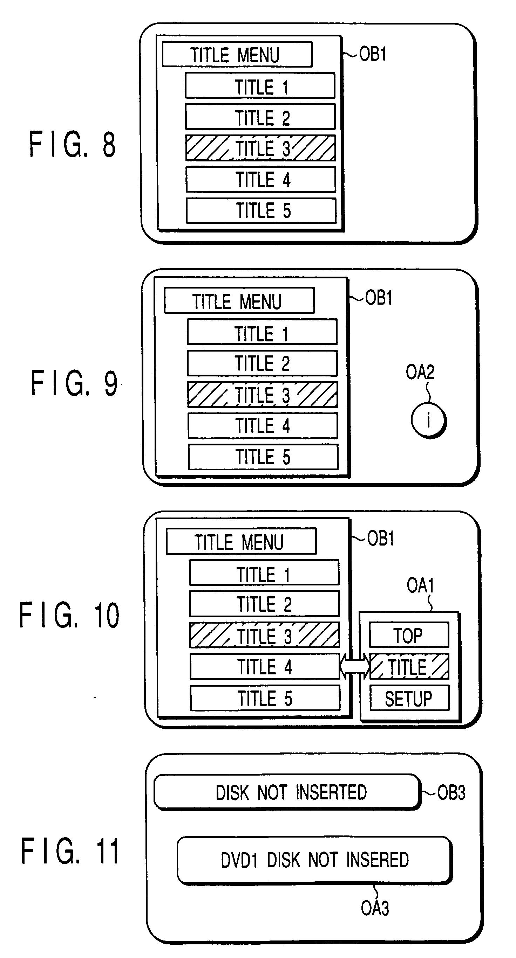

FIG. 8 is a view showing a first example of display of the DTV control panel OA1 displaying the DVD title menu OB 1, according to this embodiment. In this figure, the DTV control panel OA1 is hidden so as not to hide the DVD title menu OB1.

FIG. 9 is a view showing a second example of display of the DTV control panel OA1 displaying the DVD title menu OB 1, according to this embodiment. In this figure, the DTV control panel OA1 is displayed as an icon OA2 so as not to hide the DVD title menu OB1. A miniature image may be used in place of the icon display OA2.

FIG. 10 is a view showing a third example of display of the DTV control panel OA1 displaying the DVD title menu OB 1, according to this embodiment. In this figure, the number of buttons in the DTV control panel OA1 is limited to a minimum required value so that the DTV control panel OA1 will not overlap the display area of the DVD title menu OB1. Further, the display position of the title menu OB1 is obtained from the DVD player B to arrange the DTV control panel OA1 at an appropriate position.

If both the DTV control panel OA1 and the DVD title menu OB1 are displayed as in the example in FIG. 10, the operation target must be switched to the DTV control panel OA1 or the DVD title menu OB1 as required. A specific switching method includes providing the remote controller C with an operation target selecting button or operating the menus with the up and down arrow keys, while switching the operation target with the right and left arrow keys. In this case, even if the DVD player B has plural rows of buttons and the right and left arrow keys must be used to operate the DVD title menu, this embodiment allows OSD contents such as the positions of the operation buttons to be obtained, thus enabling such control that the arrow keys are operated to switch the operation target only if the menu or the panel does fit in the screen.

FIG. 11 is a view useful in explaining the present invention, showing an example of display on a conventional communication device.

This figure shows an example of display where the DTV display device A performs a reproduction operation on the DVD player B, resulting in an error due to the lack of an inserted medium. In the prior art, since the DTV display device A does not have means for checking the DVD player B for display contents, both the DVD display device A and the DVD player B display warning messages (OA3 and OB3) indicating that no medium has been inserted. In contrast, with the configuration according to this embodiment, the DTV display device A can check whether the DVD player B is displaying the warning message OB3 indicating that no medium has been inserted and can then provide such control as prevention of the display of the warning message OA3 on the DTV, thereby enabling appropriate display.

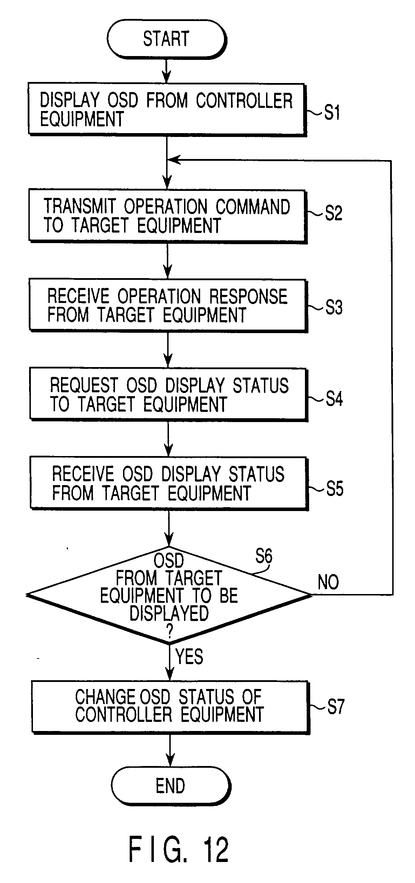

FIG. 12 is a view showing an operational flow wherein the controller equipment A controls the OSD from the target equipment B according to this embodiment.

At step S1, the OSD is provided on the controller equipment A. At step S2, an operation command is transmitted to the target equipment B. Specific examples of the operation command include RootMenu or SetupMenu for the DVD player, PLAY, and STOP. At step S3, a response to the transmitted operation command is received. At step S4, the OSD status is requested to the target equipment B, and at step S5, a response to the OSD status request is received. At step S6, the OSD status-of the target equipment B is checked to see whether the target equipment B is displaying the OSD. If the target equipment B is not displaying the OSD, the processing starting with the step S2 is repeated. If the target equipment B is displaying the OSD, then at step S7, the OSD status of the controller equipment is changed. Specific examples of the change in display status include the hiding, the iconization, the miniature display, and the like.

According to this flow, even if, for example, the change in the OSD from the target equipment B caused by the operation of the target equipment B depends on a machine type (for example, a single remote controller button is assigned with a plurality of functions and different operations are performed depending on the current mode), the controller equipment A can reliably change the OSD status.

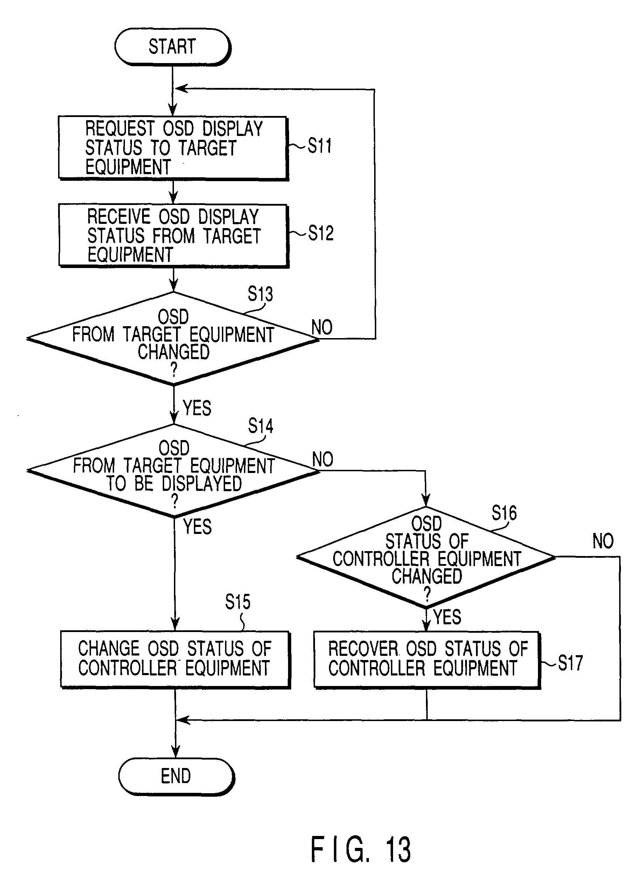

FIG. 13 is a view showing an operational flow wherein the controller equipment checks the target equipment for a change in OSD status so that the OSD from the controller equipment is controlled based on a result of the check.

At step S11, the OSD status is requested to the target equipment B. At step S12, the OSD status is received from the target equipment B. At step S13, it is determined whether the OSD from the target equipment B has changed, and if it remains unchanged, the processing at the steps S12 and S13 is repeated.

If the OSD status has changed, then at step S14, it is checked whether the OSD from the target equipment B is being presented, and if it is being presented (the hidden status has been changed to the displayed status), then at step 15, the OSD status of the controller equipment is changed. Specific examples of the change in display status include the hiding, the iconization, the miniature display, and the like.

If the OSD from the target equipment B is hidden (the displayed status has been changed to the hidden status), then at step 16, it is determined whether the OSD status of the controller equipment A has changed. If the OSD status has changed, then at step S17, the OSD status of the controller equipment A is recovered to its original status. Specific examples of the status recovery include changing the OSD from the controller equipment A to a normal size, the OSD having been changed to the icon or miniature display.

Thus, when the user is viewing to the DVD and if the DVD player automatically displays a menu in a multiangle portion, the OSD of the controller equipment A can be appropriately controlled to avoid the OSD overlapping problem.

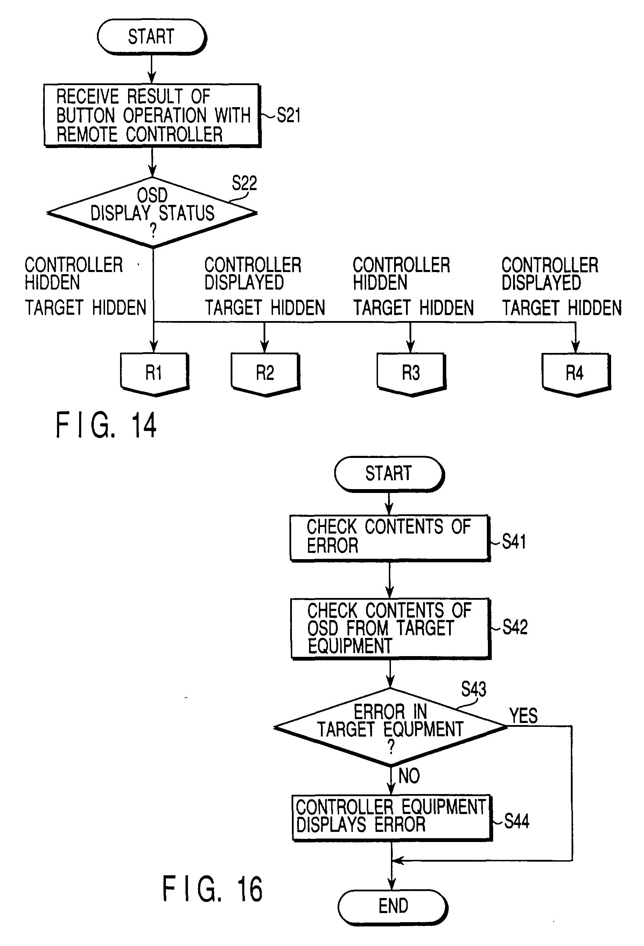

FIGS. 14 and 15A to 15D are views showing an operational flow for control provided if the controller equipment A receives a result of a button operation from an input device such as the remote controller C.

At step S21, the result of the button operation with the remote controller is received. The result of the remote controller operation (which button has been depressed) is transmitted to the controller equipment A in the form of, for example, infrared codes. Then, at step S22, the OSD statuses of the controller equipment A and the target equipment B are checked and the procedure branches to different processes depending on the display status.

If the OSDs from the controller equipment A and from the target equipment B are both hidden (R1), the contents of the button operation are checked as shown in FIG. 15A. Specific examples of the contents of the button operation include number buttons, the arrow buttons, the menu buttons, and the like. Next, at step S24, the controller equipment A is checked for the current operation mode. Specific examples of the operation mode include a BS digital reception mode and the DVD display mode. Based on the results of the steps S23 and S24, it is determined at step S25 whether the operation target is the target equipment B, and the procedure branches to different processes. This determination is based on a combination of the operation mode and the contents of the button operation. Thus, even if the same menu button has been operated, an electronic program list is displayed in the BS digital reception mode, whereas the DVD title menu is displayed in the DVD display mode.

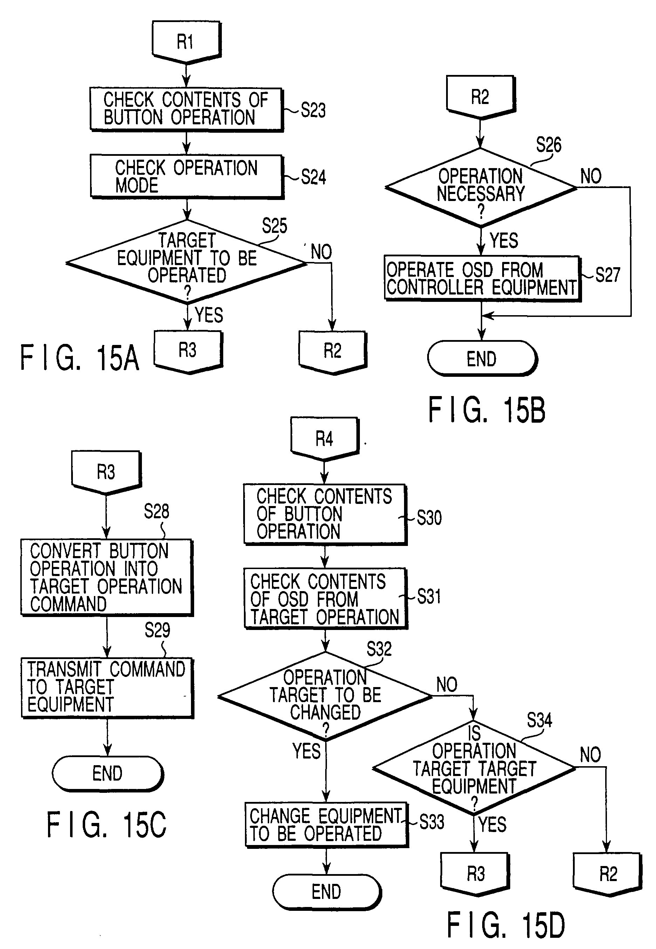

If only the OSD from the controller equipment A is being displayed (R2), then as shown in FIG. 15B, it is determined at step S26 whether the controller equipment A must be operated, and if it must be operated, the controller equipment A processes the received button operation at step S27.

If only the OSD from the target equipment B is being displayed (R3), then as shown in FIG. 15C, the button operation is converted into an operation command for the target equipment B and is then transmitted to the target equipment B at step S29. Specific examples of the conversion into the operation command for the target equipment B include a conversion into the "AV/C" command.

If the OSDs from the controller equipment A and from the target equipment B are both being presented (R4), then as shown in FIG. 15D, the contents of the button operation are checked at step S30 and the OSD from the operation target is checked for the display contents at step S31.

Specific example of the check of the display contents include a button operated position. Based on results of the checks at the steps S30 and S31, it is determined whether the equipment to be operated must be changed. Specific examples of the case where it is determined that the equipment to be operated must be changed include a case where the currently operated button is located at the left end and where the button has been operated leftward. To change the equipment to be operated, this equipment is actually changed at step S33. If the equipment to be operated is not required to be changed, it is determined at step S34 whether the operation target is the target equipment B or the controller equipment A, and the procedure branches to different processes.

FIG. 16 is a view showing an operational flow for avoiding the overlapping display of the same error message on both the controller and target equipment A and B.

At step S41, the controller equipment A is checked for the contents of the error, and at step S42, the OSD from the target equipment B is checked for the contents. Specific examples of the display contents include an error code corresponding to the error message being displayed on the target equipment B. Next, at step S43, it is determined whether the contents of the error checked at the step S41 are that same as the contents of the error displayed on the target equipment. If the former is the same as the latter, the controller equipment A is ended without executing any process. If the former is different from the latter or the target equipment B is not displaying the error message, the controller equipment A displays the error message at step S44.

As is apparent from the above process flow, according to this embodiment, the video display device as the controller equipment can check the video transmitting device as the target equipment for the OSD status to thereby provide appropriate control (the deletion or miniaturization or of the OSD from the controller equipment, making the OSD transparent, or the like) depending on the OSD status. This prevents the OSDs from overlapping each other and allows the controller equipment to reliably determine the operation mode (which equipment to control with the remote controller). Further, the operation target can be displayed with the icon or message, thereby allowing the user to operate the equipment without being confused.

As described above, the present invention can provide video processing devices as controller equipment and target equipment which can appropriately control the status of an OSD synthesized by the controller or target equipment.

## Claims

1. A video processing device as controller equipment having video requesting and receiving means (A1) for receiving a video from a video transmitting device (B) via a communication line, the video transmitting device selectively synthesizing a sub-video on a transmitted video, sub-video synthesizing means (A2) for selectively synthesizing a sub-video on the received video obtained by the video requesting and receiving means (A1), and display means (A3) for displaying the received video with the sub-video synthesized thereon by the sub-video synthesizing means (A2), **characterized in that**:
sub-video synthesis status checking means (A5) for checking the received video for a sub-video synthesis status by transmitting a check request for checking of a sub-video synthesis status to said video transmitting device (B) via said communication line and receiving a response to said check signal via the communication line from said video transmitting device (B) as a video source; and
sub-video controlling means (A4) for controlling a sub-video display status of said sub-video synthesizing means (A2) depending on the sub-video synthesis status checked by the sub-video synthesis status checking means (A5).

2. A video processing device having sub-video synthesizing means (B2) for selectively synthesizing a sub-video on a transmitted video, and video transmitting means (B3) for transmitting the video with the sub-video synthesized thereon by the sub-video synthesizing means (B2), to a video display device (A) via a communication line, **characterized in that**:
sub-video synthesis status notifying means (B5) for notifying said video display device (A) of a sub-video synthesis status of said sub-video synthesizing means (B2) via the communication line in response to a sub-video synthesis status check request transmitted from said video display device (A).

3. A video processing device according to claim 1 or 2, **characterized in that** said communication line comprises a fast serial bus.

4. A video processing device according to claim 1 or 2, **characterized in that** said sub-video synthesizing means (A2, B2) synthesizes a video of a menu selection or of a control panel used to control the device, as said sub-video.

5. A communication device according to claim 1, **characterized in that** said sub-video controlling means (A4) changes a display form of a displayed item to be synthesized by said sub-video synthesizing means (A2) when said sub-video synthesis status checking means (A5) determines that the received video changes to a sub-video synthesis status.

6. A communication device according to claim 5, **characterized in that** said sub-video controlling means (A4) recovers the display form of the displayed item which has been changed by said sub-video synthesizing means (A2), to the original display form when said sub-video synthesis status checking means (A5) determines that the received video changes to a sub-video non-synthesis status.

7. A video processing device according to claim 1, **characterized in that** said sub-video synthesis status checking means (A5) checks a range in which the sub-video is to be synthesized on the received video, and said sub-video controlling means (A4) controls said sub-video synthesizing means (A2) so that a displayed position of the sub-video to be synthesized will not overlap the range in which the sub-video is synthesized on the received video.

8. A video processing device according to claim 1, **characterized in that** based on a result of the check by said sub-video synthesis state checking means (A5), an identifying sub-video is synthesized on a displayed video, the identifying sub-video clearly showing whether the currently displayed sub-video is from the video processing device or from said video transmitting device (B).

9. A video processing device according to claim 1, **characterized in that** based on a result of the check by said sub-video synthesis state checking means (A5), an identifying sub-video is synthesized on a displayed video, said sub-video controlling means provides such control that a sub-video having the same contents as the sub-video being synthesized on the received image by means of said sub-video synthesizing means (A2).

10. A video processing device according to claim 1, **characterized by** further comprising input means (A7, C) for inputting user operations and operation target selecting means (A6) for switching an operation target based on a result of the check by said sub-video synthesis state checking means.
